# EUROPEAN PATENT SPECIFICATION

(11) **EP 1 868 750 B1**
(45) Date of publication and mention of the grant of the patent: **25.04.2012**
(21) Application number: 06739752.1
(22) Date of filing: 27.03.2006
(51) Int. Cl.: B21B 37/24, B21B 37/00, B21C 51/00, B21D 15/00, B21D 37/16, B21K 1/08, B23P 17/00

(54) **METHOD FOR STRAIGHTENING AN ECCENTRIC SHAFT**
VERFAHREN ZUR BEGRADIGUNG EINER EXZENTRISCHEN WELLE
PROCEDE DESTINE A REDRESSER UN ARBRE EXCENTRIQUE

(30) Priority: 07.04.2005 US 100701
(43) Date of publication of application: 26.12.2007
(73) Proprietor: International Engine Intellectual Property Company, LLC., Warrenville, IL 60555 (US)
(72) Inventor: MELLA, Ramon, Greenfield, IN 46140 (US); SELCH, Chad, Martinsville, IN 46151 (US)
(74) Representative: Kuhnen & Wacker
(86) International application number: PCT/US2006/011145
(87) International publication number: WO 2006/110312

(56) References cited:
- FR-A- 2 790 691
- JP-A- 9 047 960
- JP-A- 11 333 520
- JP-A- 59 101 228
- JP-A- 59 101 228
- SU-A1- 730 550
- US-A- 5 333 480
- US-A- 5 333 480
- US-A- 5 575 167
- US-A- 5 943 893

## Description

### Field of the Invention

This invention relates to a method for straightening eccentric shafts of the type used in internal combustion engines, such as camshafts or crankshafts, especially previously hardened shafts, by deep fillet rolling.

### Background of the Invention

Eccentric shafts are made for a variety of uses. One of the most common uses is in internal combustion engines. In a piston-driven internal combustion engine the power is generated within a plurality of cylinders by reciprocating pistons which, depending on the combustion cycle employed, compress air or a combustible mixture of fuel and air for subsequent ignition. The pistons follow a reciprocating axial path, and are connected on a side opposite to their combustion face to connecting rods. The connecting rods are in turn connected to an eccentric shaft, the crankshaft. The crankshaft is used to translate the axial reciprocating motion of the pistons into rotational motion. The pressures generated by combustion in the cylinder acting through this rotational motion create the power output of the engine. Another eccentric shaft, the camshaft, is typically used in internal combustion engines to control the timing of the intake and exhaust valves in the cylinders.

Eccentric shafts are required to withstand both high torsional loading, as well as millions of load cycles. For this reason eccentric shafts are usually made of strong and ductile materials, such as steel, and are often hardened for added strength, either by cold working, or by heat treating, or by induction hardening the eccentric shaft to change the crystalline structure of the metal in the high load concentration areas to increase strength. The straightness of the eccentric shaft is critical to its operation, partly because it has to fit within the engine structure and partly because a lack of straightness can cause severe vibration. Straightness also gives the eccentric shaft good balance for rotation and reduces torsional vibrations.

An acceptable hardening process for certain internal combustion engines is roll hardening or cold working a crankshaft by rolling fillets on the edges of crankpin and main journal segments. However, in high output engines, particularly diesel engines, roll hardening may not produce sufficient crankshaft strength.

Induction hardening is a widely used process for the surface hardening of steel eccentric shafts. For example, a crankshaft is heated by alternating magnetic fields to a temperature within or above the transformation range of steel, followed by immediate quenching. The core of the crankshaft remains unaffected by the treatment, and its physical properties are those of the material it was initially formed in, but the hardness of the case is considerably increased by residual compressive stresses in the material, a result of quenching.

Eccentric shafts oftentimes may develop excessive run-out, or axial misalignment, partly as a result of residual stresses from the machining and induction hardening operations. In such cases, the run-out renders a part non-conforming to the eccentric shaft specifications, potentially resulting in scrap of a relatively expensive component. This is particularly important in a high volume production process because the material rejected increases cycle time and rework cost, as well as scrap rates.

The traditional method to straighten induction-hardened eccentric shafts is to straighten them using a press straightener to impart a load in a single plane to the eccentric shaft. However, the resulting deflection of the eccentric shaft may push a portion of the hardened case out of compression and into tension, thus locally lowering the strength of the shaft.

Accordingly, there is a need for straightening eccentric shafts, such as engine crankshafts and camshafts, and especially induction-hardened crankshafts and camshafts, without compromising their strength.

The JP 11 333520 A discloses a straightening method without lowering the fatigue strength is fillet parts by cold roll-working.

The US 5,333,480 discloses a truing operation for straightening out of true work pieces such as crankshafts, wherein the fatigue strength of the work piece achieved in a previous strengthening operation must not again be reduced. This is achieved by a truing operation, wherein locally bounded compressive residual stresses are induced in a surface layer zone of the work piece by a hardening operation, whereby the respective out of true deformation of the work piece is at least reduced. The truing operation is repeated until the out of true deformation is eliminated. The compressive residual stresses are induced in a surface layer zone of the work piece by a locally limited hardening operation, e.g. a surface strengthening rolling operation. By appropriately varying the extent of hardening or the rolling force respectively, any out of true deformation may be even completely eliminated. For this purpose, one roller is pressed against the notch or shoulder area, for example a transition concave fillet of the circumferential surface of the crankshaft end or a shoulder area.

### Summary of the Invention

The present invention is directed to a method for straightening eccentric shafts, such as engine crankshafts or a camshafts, according to claim 1.

### Brief Description of the Drawings

FIG. 1 is a radial view of a crankshaft which may be straightened in accordance with the invention.
FIG. 2 is an enlarged detail of the area 2 of the crankshaft of Fig. 1 illustrating the fillets or grooves formed between the crank pin and the counterweight.
FIG. 3A is a schematic illustration of a portion of the crankshaft of FIG.1 engaged in rollers of a fillet rolling apparatus
FIG. 3B is a schematic illustration of the crankshaft portion of Fig. 3A showing the selective application of rolling forces
FIG. 3C is a schematic illustration of a cross section of the crankshaft portion of Fig. 3A showing the selective application of rolling forces.
FIG. 4A is a schematic illustration of a portion of the crankshaft of FIG.1 engaged in rollers of a fillet rolling apparatus.
FIG. 4B is a schematic illustration of the crankshaft portion of Fig. 4A showing the selective application of rolling forces.
FIG. 4C is a schematic illustration of a cross section of the crankshaft of Fig. 4A showing the selective application of rolling forces.
FIG. 5 is a flowchart representation of a method in accordance with the invention.
FIG. 6 is a graphical representation of the magnitude of the compressive forces for crankshaft angular rotations.
FIG. 7A is an illustration of a crankshaft having its centerline bowed out of alignment.
FIG. 7B is an illustration of a crankshaft having its centerline S-shaped out of alignment.
FIG. 8 is a radial view of a camshaft which may be straightened in accordance with the invention.
FIG. 9 is an enlargement of the area 6 of the camshaft of Fig. 8 illustrating the fillets formed between the journal and the main shaft.
FIG. 10A is a schematic illustration of a portion of the camshaft of FIG. 8 engaged in rollers of a fillet rolling apparatus.
FIG. 10B is a schematic illustration of the camshaft portion of Fig. 10A showing the selective application of rolling forces.
FIG. 10C is a schematic illustration of a cross section of the camshaft portion of Fig. 10A showing the selective application of rolling forces.

### Description of a Preferred Embodiment

The following describes a method of straightening a hardened eccentric shaft for an internal combustion engine, such as a crankshaft or camshaft, by the use of a selectively-programmed deep rolling machine. This method for straightening eccentric shafts that have been hardened, preferably induction-hardened, without losing the residual compressive stresses and fatigue strength thereof. An induction hardened shaft has regions where the material of the shaft is steel having a martensitic structure. Martensite is the hard constituent that is the chief component of quenched steel.

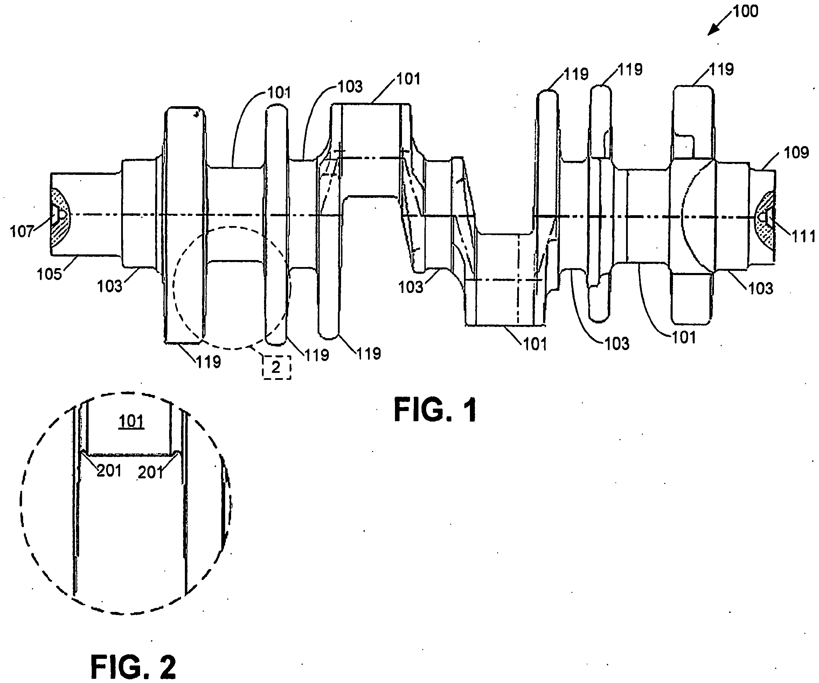

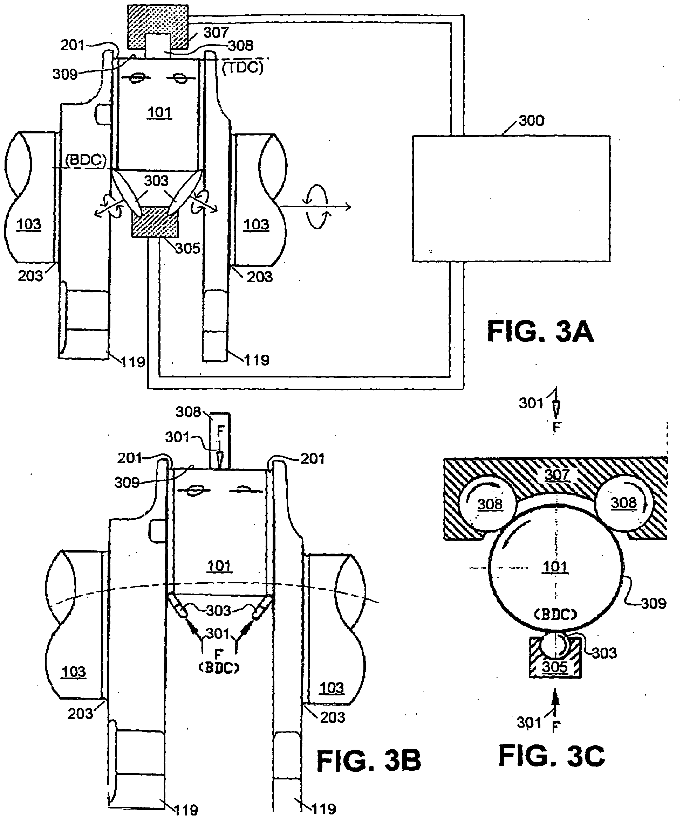

A typical crankshaft is shown in FIG. 1. This crankshaft is configured for use in a V-8 internal combustion engine, preferably a diesel engine, but the advantages of this invention can be realized when used not only on a crankshaft resembling the one shown, but any eccentric shaft, such as a crankshaft or a camshaft, used on any engine or machine. A crankshaft 100 typically includes at one end, a cylindrical front seal surface 105 to engage a conventional front seal (not shown) disposed on a front side of an engine. On the other end, a rear seal surface 109 similarly provides engagement of a conventional rear crankshaft seal (not shown) disposed on a rear side of the engine. Intermediate its ends, the crankshaft 100 has five main journals 103 which engage in a conventional manner main bearings (not shown) in the crankcase (not shown) to support the crankshaft 100, and four crankthrows or crankpins 101 to which conventional connecting rods (not shown) are connected to input the power from the pistons to the crankshaft 100. Disposed between and separating the crankpins 101 from the main journals 103 are counterweights 119 which form the walls between the main journals 103 and the crankpins 101. The crankshaft 100 further has a front target 107 and a rear target 111 identifying the centers of the front journal 105 and the rear journal 109 respectively defining an imaginary centerline 113 through the crankshaft 100, and providing points of engagement with a deep rolling machine 300 (shown in FIG. 3A). In an optimal condition, the crankshaft centerline 113 is a straight line coinciding with the axis of rotation extending between the front target 107 and rear target 111.

A detailed view of the intersection between two adjacent counterweights 119 around one crankpin 101 is shown in FIG. 2. A continuous peripheral groove or fillet 201 can be seen on either side of the crankpin 101, the groove 201 having a smooth radius blending into the counterweight 119. Similar grooves are found on either side of each crankpin 101. As shown in FIG. 3A, a similar continuous peripheral groove 203 is located between each main journal 103 and the adjacent counterweight 119. Each of the grooves 201, 203 is located in a stress concentration area on the crankshaft 100 during operation, and is intended to alleviate the stresses going through it during engine operation. These grooves are manufactured to provide residual compressive stresses as a result of the induction hardening operation in the surface in these areas, to help offset tensile stresses that occur during operation.

In some instances, crankshafts that undergo hardening develop problems with the straightness of their centerlines. This invention presents a method to straighten the centerline 113 of a crankshaft 100, without compromising the residual compressive stresses provided in each groove 201, 203, after the crankshaft 100 has undergone an induction hardening process. Traditional hardening operations for crankshafts, for example deep fillet rolling, cause the metal crystals in the material to elongate and work harden. In the case where induction hardening is used, the metal structure is martensitic and behaves differently when subjected to loading.

A deep rolling machine 300, which holds and rotates the crankshaft 100 about the axis between the targets 107 and 111, has appropriate crankpin structures 305 with rollers 303 running in each crankpin groove 201, and is able to follow each crankpin 101 in its orbit as the crankshaft 100 rotates about its centerline 113 without losing contact between the rollers 303 and the grooves 201 is used to straighten the induction hardened shaft, as shown in FIG. 3A. Similarly, an appropriate support structure 307 with rollers 308 is provided to run on the body of the crankpin 309 without losing contact between the rollers 308 and the body of the crankpin 309.

Except for the programming, the deep roller machine 300, as used for straightening crankshafts, is a typical machine known in the art for deep rolling of fillets in crankshafts for hardening the crankshaft by cold working the material, such as the software driven, electronically-controlled deep fillet rolling machine illustrated in U.S. Patent No. 5,493,761, which is incorporated herein by reference. The deep roller machine 300 used for this invention is capable of imparting through the rollers 303 a compressive force 301 to the grooves 201 of the crankshaft. However, the application of the compressive force 301 to the grooves 201 is arranged to act only for a predetermined angle of rotation of the crankshaft 100 as it rotates in the deep rolling machine 300. The rollers 308 ride against the central portion of the crankpin between the rollers to resist and divide the radial (relative to the crankpin) component of the compressive force 301. This resistance and division of the compressive force 301 is made possible by forcible engagement of the grooves 201.

The compressive force 301 is the force that causes the crankshaft 100 to deform in the section clamped by the machine 300, in this case, the crankpin 101. The rotational orientation of the crankshaft 100 in the machine 300 is advantageously controlled and known. The compressive force 301 acts during the time when the crankpin 101 is substantially at or approaching a position adjacent rotationally to a predetermined rotational position offset relative to a Top Dead Center (TDC) known mounting rotational position, and the rollers 303 are substantially at, or ramping up or down from, a position rotationally opposed to a corresponding Bottom Dead Center (BDC) location of the crankpin 101, as is shown in FIG. 3B and FIG. 3C. Through the application of each compressive force 301, the section of the crankshaft 100 that includes the crankpin 101 between the rollers 303 is straightened through the flow of solid material or plastic deformation inside each groove 201 by the action of the axial components of the compressive forces 301 applied through the rollers 303. The compressive forces 301 maintain the material of the crankshaft 100 in compression, and thus, do not lessen its strength.

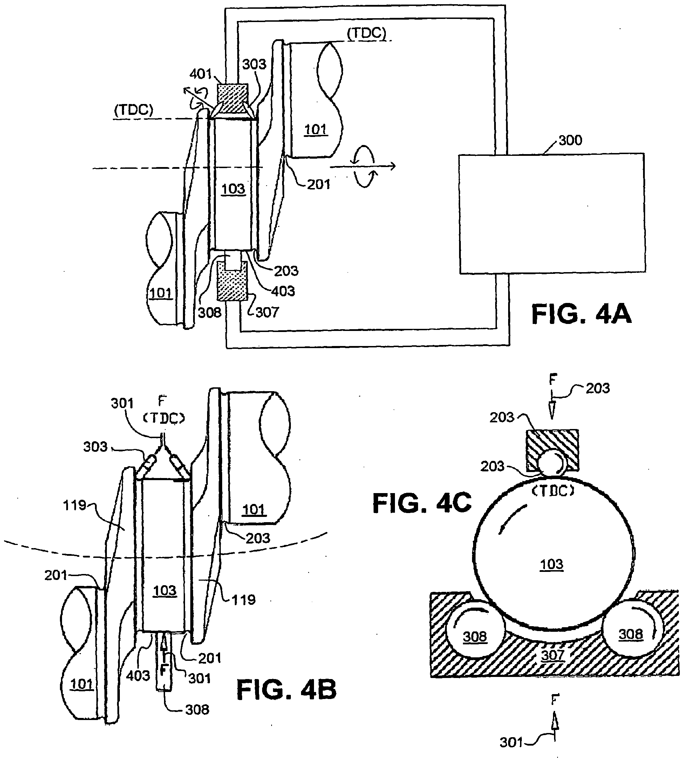

The deep roller machine 300 used for this invention is also capable of clamping a main journal 103, as shown in FIG. 4A. An appropriate journal structure 401 has rollers 303 in contact with the journal grooves 203 and a support structure 307 having rollers 308 is in contact with the journal body surface 403 of the journal 103. The application of the compressive force 301 is again arranged to act only for a predetermined angle of rotation of the crankshaft 100 as it rotates in the deep rolling machine 300.

The compressive force 301 is the force that causes the crankshaft 100 to straighten in the section clamped by the machine 300, in this case, the journal 103. The compressive force 301 acts through the rollers 303 on the grooves 201 during a predetermined circumferential segment substantially at, or ramping up or down from, a rotational position of the crankshaft 100 corresponding to a plane of maximum positive run-out while the rollers 308 are spaced along across a diametrically opposed circumferential segment to resist and divide the radial component of the compressive force 301 as is shown in FIG. 4B and FIG. 4C. The compressive forces 301 may advantageously be an impulse force applied to a central location of the predetermined circumferential segment. Through the application of each compressive force 301, the section of the crankshaft 100 that includes the journal 103 between the rollers 303 is straightened through the flow of solid material or plastic deformation inside each groove 201 by the action of the axial components of the compressive forces 301 applied the rollers 303. These compressive forces do not put the material of the crankshaft 100 into tension, and thus, do not lessen its strength.

In the straightening of the crankshaft 100 through either the crankpin 101 or the journal 103, because the compressive force 301 is not uniformly applied, but only at, or ramping up or down from, a particular rotational position, the flow of material or plastic deformation takes place, primarily in one circumferential segment of the crankpin 101 or journal 103 while little or no material flow or plastic deformation takes place on the diametrically opposed segment. This results in slightly changing the angle between the crankpin 101 or journal 103 and the adjacent structure, the counterweight 119 in this case, in the radial plane of crankshaft rotation in which the compressive force 301 is applied.

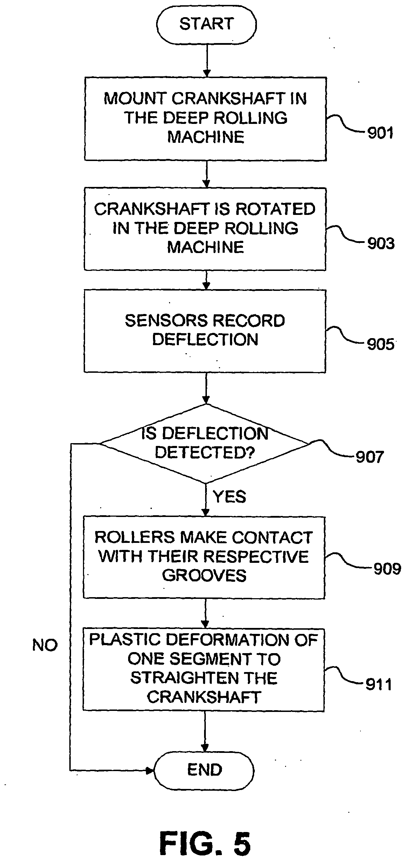

The straightening method of a crankpin 101, shown for example, for the crankshaft 100 is shown in FIG. 5 as a flowchart. The method shown in FIG. 5 applies for the straightening of a crankpin 101, but is also applicable to the straightening of the journal 103 as presented earlier, and also for the straightening of a feature on any eccentric shaft, like for example the straightening of a lobe or a journal feature on a camshaft.

The crankshaft 100 is mounted by targets 107 and 111 for rotation in the deep rolling machine 300 in step 901 of FIG. 5. , the crankshaft 100 is rotated in the deep rolling machine 300 in step 903. Appropriate sensors sense the rotational position and alignment of the crankpin 101 during the rotation of the crankshaft 100 to record the angular position thereof relative to a known crankshaft reference position, such as a plane established between TDC and BDC of the pin 101, as well as deflection in step 905. If deflection is detected in the distance between the crankpin 100 and the axis of rotation of the crankshaft, as defined by a line connecting the front target 107 and the rear target 113, a decision is made in step 907 and adjustments are made to bring the centerline of rotation closer to the ideal centerline 113 of the crankshaft 100. Each roller 303 makes contact with its respective groove 201 on either side of a crankpin 101 and the rollers 308 engage the body portion 309 of the crankpin 101 in step 909. The deep rolling machine 300 may be capable of engaging a single crankpin 101 or a single main journal 103, or a plurality of them simultaneously. Additionally, the rollers 308 have fixed axes to provide passive resistance to the compressive forces 301 generated by the rollers 303 but alternatively may be actively loaded by the structures 307. Once the rollers 303 are engaged in their respective grooves 201 and the rollers 308 engaged on the body surface, a compressive force 301 is imparted through each roller 303 and/or 308 as described above. This compressive force 301 makes adjustments to the straightness of the crankshaft 100 in step 911.

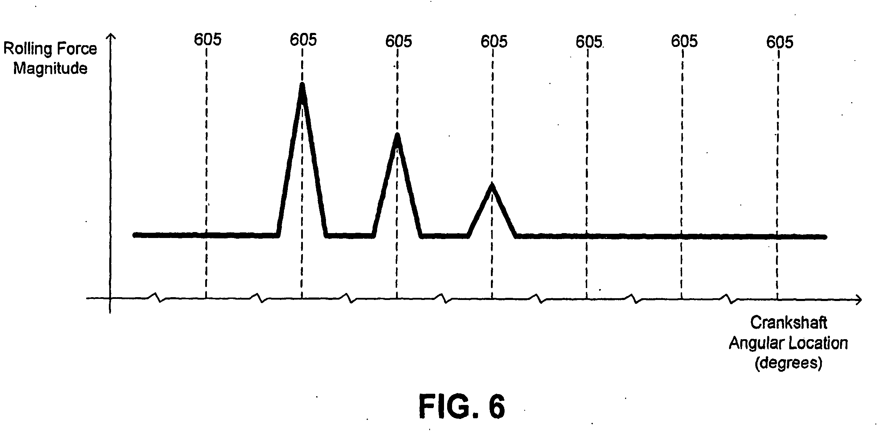

In the case of the crankpins 101 of crankshaft 100, it has been found that the plane of maximum run-out is coincident with TDC for each crankpin. In the case of the journals 103 and other eccentric shafts, the plane of maximum run-out may be in another diametrical plane. Fig. 6 illustrates the application of the compressive force 301 when the plane of maximum run-out corresponds to an angle 605 relative to an initial mounting rotational position of the crankshaft 100. Each application of the compressive force 301 occurs once for a full revolution of the crankshaft 100.

In FIG. 6, each rotation of the crankshaft 100 is shown with respect to a specific crankpin 100 engaged by the deep rolling machine 300. The duration of application of the compressive force 301 is shown as ramping up before the angle 605 , reaching a maximum value at the angle 605 , and ramping back down after the angle 605 to a low nominal value at least sufficient to maintain the engagement of the rollers 303, 308 that could be zero. After each application of the compressive force 301, a computer connected to sensors makes a determination on whether the crankshaft 100 is in a state of acceptable straightness. If the crankshaft 100 straightness is still not acceptable, an additional application of the compressive force 301 is required, which can have an equal, lesser or greater magnitude than the first application. This process is repeated until the crankshaft 100 has attained a desired straightness for the crankpin 101 that is engaged. The magnitude of the compressive force 301 depends on the amount of deflection that is being corrected, and may advantageously be between about 6 to 17 kN. The deep rolling machine 300 then disengages the crankpin 101 and proceeds to engage an adjacent crankpin 101 as described earlier. The straightening process may be repeated on the adjacent crankpin 101. Alternatively, all of the crankpins may be engaged and straightened sequentially as the crankshaft rotates. A similar process may be applied to the main journals. After each crankpin 101 and/or main journal has been subjected to the straightening process, the crankshaft 100 should be acceptably straight.

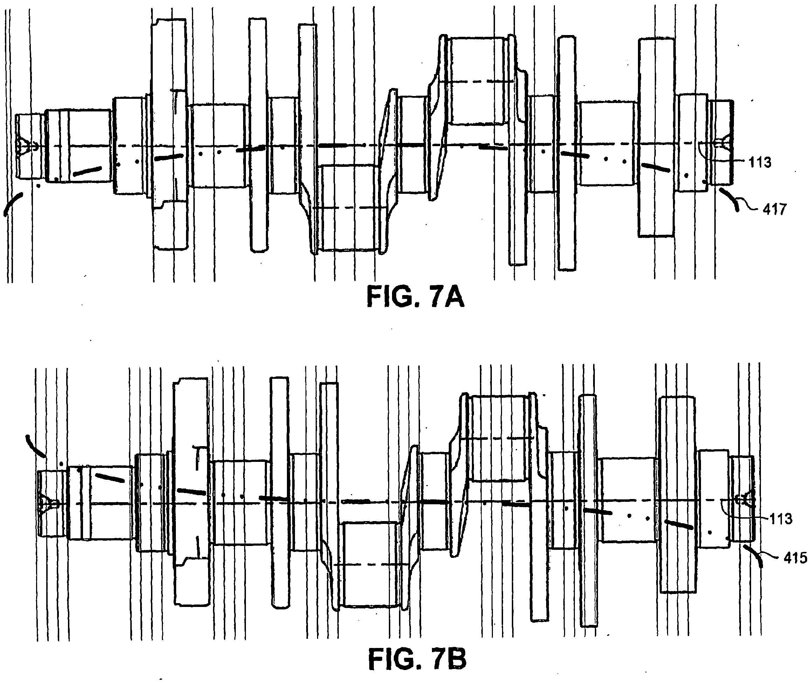

Non acceptable shapes of crankshafts can be found in many different forms. As is shown in FIG. 7A and FIG. 7B, a crankshaft can have a bowed centerline 417 or an S-shaped centerline 415. These are two examples of the at least 10 different families of distortions that have been observed in crankshafts thus far, whose centerlines may deviate three-dimensionally from a desired straight centerline 113. This invention is advantageously suitable to manage any deflection of the centerline 113 of a crankshaft 100, because it is able to align each crankpin 101 or main journal 103 independently of the rest. The ability to straighten an eccentric shaft having a martensitic crystalline structure without compromising its strength, and the ability to perform a straightening operation quickly and using common equipment in the art of manufacturing crankshafts are additional advantages. This embodiment involves operations made to crankshafts designed for use in internal combustion engines. This method, however, would work equally well for crankshafts, camshafts or any eccentric shaft designed for any other application or machine.

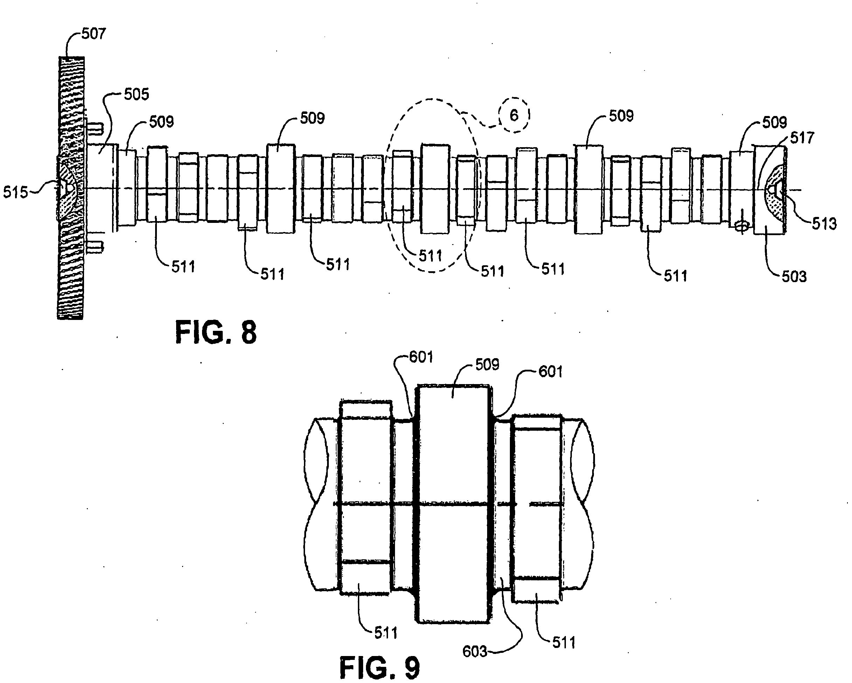

### THE EMBODIMENT OF FIGS. 8 - 10

In this embodiment, the method of the invention is applied to straightening a camshaft. A typical camshaft 501 is shown in FIG. 8. This camshaft 501 is configured for use in a V-8 internal combustion engine, preferably a diesel engine, but the advantages of this invention can be realized when used not only on a camshaft resembling the one shown, but any camshaft used on any engine or machine. A camshaft 501 typically may include at one end, a cylindrical front seal surface 503 to engage a conventional front seal (not shown) disposed on a front side of an engine. On the other end, a rear seal surface 505 similarly provides engagement of a conventional rear crankshaft seal (not shown) and a rear driving gear 507 disposed on a rear side of the engine. Intermediate its ends, the camshaft 501 may have one or more main journals 509 which engage in a conventional manner bearings (not shown) in the engine (not shown) to support the camshaft 501, and a plurality of lobes 511 that are engaged by conventional cam followers (not shown) or valve lifters (not shown) to actuate intake and exhaust valves for the cylinders. On a camshaft 501 for a V8 engine, as shown, sixteen lobes 511 are separated by the journals 509 in sets of four. The camshaft 501 further has a front target 513 and a rear target 515 identifying the centers of the front journal 503 and the rear journal 505 respectively, defining an imaginary centerline 517 through the camshaft 501, and providing points of engagement with a deep rolling machine. In an optimal condition, the camshaft centerline 517 is a straight line coinciding with the axis of rotation extending between the front target 513 and rear target 515.

A detailed view of the intersection between two adjacent sets of lobes 511 around one journal 509 is shown in FIG. 9. A continuous peripheral groove or fillet 601 can be seen on either side of the journal 509 forming a smooth radius blending into the main shaft 603. Similar fillets are found on either side of each journal 509. The area of each of the fillets 601 is a stress concentration area on the camshaft 501 during operation. Each fillet 601 is intended to alleviate the stresses going through it during engine operation. These fillets are manufactured to provide residual compressive stresses in the steel in these areas. The compressive stresses in the fillets help offset tensile stresses that occur during operation.

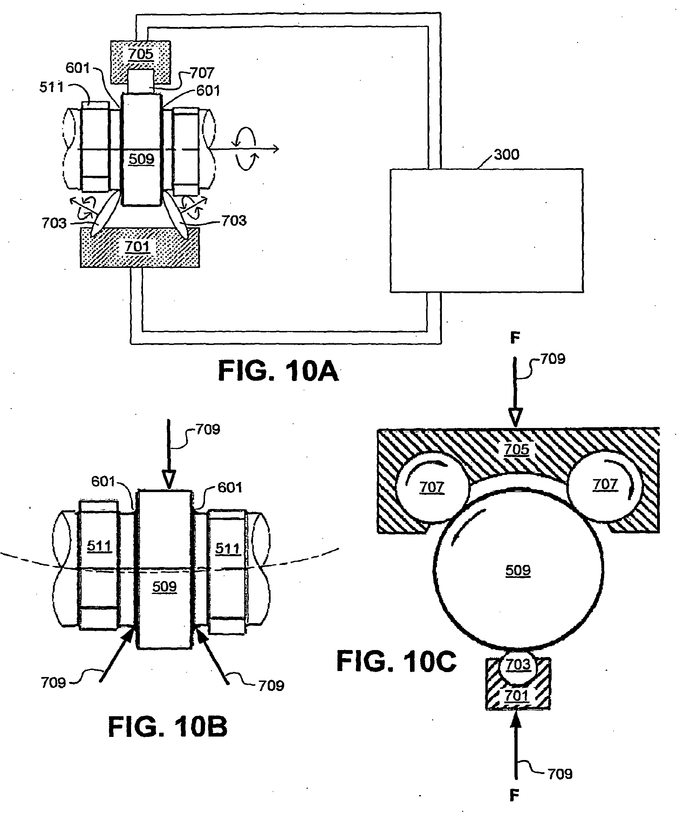

In some instances, camshafts that undergo a hardening process may develop problems with the straightness of their centerlines. This invention presents a method to straighten the centerline 517 of a camshaft 501, without compromising the residual compressive stresses provided in each fillet 601, after the camshaft 501 has undergone a hardening process. As shown in FIG. 10A, a deep rolling machine 300 may be used to hold and rotate the camshaft 501 about the rotational axis 517 between the targets 513 and 515. An appropriate journal structure 701 with rollers 703 running on each fillet 601, may be provided to follow each journal 509 without losing contact between the rollers 703 and the fillets 601. Similarly, an appropriate support structure 705 with rollers 707 may be provided to run on the body of the journal 509 without losing contact between the rollers 707 and the body of the journal 509.

A compressive force 709 would cause the camshaft 501 to straighten in the section clamped by the machine 300, in this case, the journal 509 shown in FIG. 10B by acting through the rollers 709 on the grooves 601 during a predetermined circumferential segment substantially at, or ramping up or down from, a rotational position of the camshaft 501 corresponding to a plane of maximum run-out while the rollers 707 are arranged to resist and divide the radial component of the compressive force 709 as shown in FIG. 10C. Through the application of each compressive force 709, the section of the camshaft 501 that includes the journal 509 between the rollers 703, 707 may be straightened by causing plastic deformation or flow of solid material around each fillet 601 by the action of the axial components of each compressive force 709. These compressive forces do not put the material of the camshaft 501 into tension, and thus, do not lessen its strength.

In the straightening of the camshaft 501 through the journal 509, because the compressive force will not be uniformly applied, but only at, or ramping up or down from, a particular rotational position, the flow of material or plastic deformation may take place on the diametrically opposed segment. This may result in slightly changing the angle between the journal 509 and the adjacent shaft structure in the radial plane of camshaft rotation in which the compressive force 709 is applied, i.e., in the plane of maximum run-out.

Each compressive force 301, 709 is equal in magnitude in a radial force balance direction. The application of each compressive force 301, 709 may occur in any desired scheme that is a function of angle of rotation of the crankshaft 100 or the camshaft 501 mounted in the deep rolling machine 300, or a function of timing with respect to the rotational speed of the crankshaft 100 or the camshaft 501 mounted in the deep rolling machine 300. Angular sensors, visual sensors, rotational position sensors, stress sensors, positional sensors, timing sensors, and so forth, can sense the angular position or the rotational speed of the crankshaft 100 or the camshaft 501 as mounted in the machine 300 during operation.

The present invention may be embodied in other specific forms than described above without departing from the scope of appended claims.

## Claims

1. A method for straightening a hardened eccentric shaft (100, 501) comprising the steps of:
engaging with a first roller (303, 703) a first continuous peripheral groove (201, 601) disposed about said shaft at a first intersection of an element of said shaft with adjacent shaft structure;
engaging with a second roller (303, 703) a second continuous peripheral groove (201, 601) disposed about said shaft at second intersection of said element of said shaft with adjacent shaft structure, said second intersection being axially displaced from said first intersection;
rotating said shaft (100, 501) through a series of angular positions thereof;
varying the magnitude of the compressive force depending on the angular position of the eccentric shaft (100, 501); and
causing solid material flow adjacent to the element, thereby relocating the element relative to the adjacent shaft structure;
**characterized by** engaging with a third and a fourth roller (308, 707) a body (101, 509) of the shaft, wherein the body of the shaft is disposed between the first intersection and the second intersection of said element and the third and the fourth roller (308, 707) are spaced along across a diametrically opposed circumferential segment of the body (101, 509) of the shaft;
applying a compressive force of variable magnitude through said rollers (308, 707) to both of said grooves (201, 601) and said body (101, 509); and
wherein the rollers (303, 703) running on each groove (201, 203) without losing contact between the rollers (303, 703) and the grooves (201, 203) while the support rollers (308, 707) are provided to run on the body without losing contact between the rollers (308, 707) and the body.

2. The method of claim 1 wherein magnitude of the compressive force varies from zero to an amount sufficient to cause plastic deformation in the grooves (201, 601).

3. The method of claim 1 wherein the compressive force is only applied over a circumferential segment of the element, said segment including a rotational plane of maximum run-out of said eccentric shaft (100, 501).

4. The method of claim 3, wherein the compressive force causes solid material flow in said circumferential segment, and no material flow in a diametrically opposed segment of said element.

5. The method of claim 4, wherein the solid material is martensitic steel.

6. The method of claim 1, wherein the compressive force is an impulse force applied at the intersection of the circumferential segment of the element and the rotational plane of maximum run-out.

## Patentansprüche

1. Verfahren zum Begradigen einer gehärteten Exzenterwelle (100, 501), das folgende Schritte beinhaltet:
Ineingriffbringen mit einer ersten Walze (303, 703) durch eine erste ununterbrochene umfänglich verlaufende Aussparung (201, 601), die um die Welle herum an einem ersten Schnittpunkt eines Elements der Welle mit einer benachbarten Wellenstruktur angeordnet ist;
Ineingriffbringen mit einer zweiten Walze (303, 703) durch eine zweite ununterbrochene umfänglich verlaufende Aussparung (201, 601), die um die Welle herum an einem zweiten Schnittpunkt des Elements der Welle mit einer benachbarten Wellenstruktur angeordnet ist, wobei der zweite Schnittpunkt von dem ersten Schnittpunkt axial verschoben ist;
Rotieren der Welle (100, 501) über eine Reihe von Winkelpositionen derselben;
Variieren der Größe der Druckkraft abhängig von der Winkelposition der Exzenterwelle (100, 501); und
Bewirken eines Fließens des festen Werkstoffs neben dem Element, wodurch das Element relativ zu der benachbarten Wellenstruktur versetzt wird;
**gekennzeichnet durch** Ineingriffbringen eines Körpers (101, 509) der Welle mit einer dritten und einer vierten Walze (308, 707), wobei der Körper der Welle zwischen dem ersten Schnittpunkt und dem zweiten Schnittpunkt des Elements angeordnet ist, und die dritte und die vierte Welle (308, 707) auf einem diametral gegenüberliegenden Umfangssegment des Körpers (101, 509) der Welle beabstandet angeordnet ist;
Ausüben einer Druckkraft einer variablen Größe **durch** die Walzen (308, 707) auf die beiden Aussparungen (201, 601) und den Körper (101, 509); und
wobei die Walzen (303, 703), die über eine jeweilige Aussparung (201, 203) laufen, ohne den Kontakt zwischen den Walzen (303, 703) und den Aussparungen (201, 303) zu verlieren, während die Stützwalzen (308, 707) so angeordnet sind, dass sie auf dem Körper laufen, ohne den Kontakt zwischen den Walzen (308 707) und dem Körper zu verlieren.

2. Verfahren nach Anspruch 1, wobei die Größe der Druckkraft von null bis zu einem Betrag variiert, der ausreicht, um eine plastische Verformung in den Aussparungen (201, 601) zu bewirken.

3. Verfahren nach Anspruch 1, wobei die Druckkraft nur auf ein Umfangssegment des Elements ausgeübt wird, wobei das Segment eine Rotationsebene eines maximalen Rundlaufs der Exzenterwelle (100, 501) beinhaltet.

4. Verfahren nach Anspruch 3, wobei die Druckkraft ein Fließen des festen Werkstoffs in dem Umfangssegment bewirkt und kein Werkstofffließen in einem diametral gegenüberliegenden Segment des Elements bewirkt.

5. Verfahren nach Anspruch 4, wobei der feste Werkstoff martensitischer Stahl ist.

6. Verfahren nach Anspruch 1, wobei die Druckkraft eine Impulskraft ist, die auf den Schnittpunkt des Umfangssegments des Elements und der Rotationsebene des maximalen Rundlaufs ausgeübt wird.

## Revendications

1. Procédé de redressement d'un arbre (100, 501) excentrique trempé, comprenant les stades dans lesquels :
on fait pénétrer un premier galet (303, 703) dans une première rainure (201, 601) périphérique continue, disposée autour de l'arbre, à une première intersection d'un élément de l'arbre avec une structure d'arbre voisine ;
on fait pénétrer un deuxième galet (303, 703) dans une deuxième rainure (201, 601) périphérique continue, disposée autour de l'arbre, à une deuxième intersection de l'élément de l'arbre avec une structure d'arbre voisine, la deuxième intersection étant décalée axialement de la première intersection ;
on fait tourner l'arbre (100, 501) en le faisant passer par une série de ses position angulaires ;
on fait varier l'intensité de la force de compression en fonction de la position angulaire de l'arbre (100, 501) excentrique ; et
on fait s'écouler de la matière solide au voisinage de l'élément en relocalisant ainsi l'élément par rapport à la structure d'arbre voisine ;
**caractérisé en ce que** l'on fait pénétrer un troisième et un quatrième galets (308, 707) dans un corps (101, 509) de l'arbre, le corps de l'arbre étant disposé entre la première intersection et la deuxième intersection de l'élément et le troisième et le quatrième galets (308, 707) étant à distance le long d'un segment circonférentiel opposé diamétralement du corps (101, 509) de l'arbre ;
on applique une force de compression d'intensité variable par les galets (308, 707) aux deux rainures (201, 601) et au corps (101, 509) ; et
dans lequel les galets (303, 703) courent sur chaque rainure (201, 203) sans perte de contact entre les galets (303, 703) et les rainures (201, 301), tandis que les galets (308, 707) supports sont prévus pour courir sur le corps sans perdre de contact entre les galets (308, 707) et le corps.

2. Procédé suivant la revendication 1, dans lequel l'intensité de la force de compression varie de zéro à une valeur suffisante pour provoquer une déformation plastique des rainures (201, 601).

3. Procédé suivant la revendication 1, dans lequel on applique la force de compression seulement sur un segment circonférentiel de l'élément, ce segment comprenant un plan de rotation d'ovalisation maximum de l'arbre (100, 501) excentrique.

4. Procédé suivant la revendication 3, dans lequel la force de compression provoque un écoulement de matière solide dans le segment circonférentiel et ne provoque pas d'écoulement de matière dans un segment opposé diamétralement de l'élément.

5. Procédé suivant la revendication 4, dans lequel la matière solide est de l'acier martensitique.

6. Procédé suivant la revendication 1, dans lequel la force de compression est une force de poussée, appliquée à l'intersection du segment circonférentiel de l'élément et du plan de rotation d'ovalisation maximum.
